# EUROPÄISCHE PATENTANMELDUNG

(11) **EP 0 902 431 A2**
(43) Veröffentlichungstag der Anmeldung: **17.03.1999**
(21) Anmeldenummer: 98202947.2
(22) Anmeldetag: 03.09.1998
(51) Int. Cl.: G11B 27/034, G11B 27/34, G10L 5/06, G06F 3/033

(54) **System zum Schneiden digitaler Video- und Audioinformationen**

(30) Priorität: 12.09.1997 DE 19740119
(71) Anmelder: Philips Patentverwaltung GmbH, 22335 Hamburg (DE); Koninklijke Philips Electronics N.V., 5621 BA Eindhoven (NL)
(72) Erfinder: Schulz, Axel, Dipl.-Ing. c/o Philips Patentverwalt, 22335 Hamburg (DE)
(74) Vertreter: Schmalz, Günther, Dipl.-Ing.

(57) **Zusammenfassung**

Um eine Schnittliste zum nicht-linearen Schneiden von Video- und Audioinformationen zu erstellen, ist ein Mittel (21) zum Erkennen von Sprache in den Audioinformationen und zum Erzeugen einer Zeichenfolge (27), insbesondere einer ASCII-Zeichenfolge, vorgesehen. Die erzeugte Zeichenfolge (27), wird auf dem Bildschirm eines Anzeigemittels (8) dargestellt. Ein Mittel (2) leitet anhand markierter Teile (28 bis 34) der auf dem Bildschirm des Anzeigemittels (8) dargestellten Zeichenfolge (27) Schnittdaten für die Schnittliste (24) ab.

## Beschreibung

Die Erfindung betrifft ein System zum Schneiden digitaler Video- und Audioinformationen, umfassend: ein Speichermittel zur Aufnahme und Wiedergabe der Video- und Audioinformationen, ein Anzeigemittel zur Anzeige von Informationen, ein Mittel zum Erstellen einer Schnittliste, welche Schnittdaten enthält, und ein Steuermittel zur Steuerung des Speichermittels in Abhängigkeit der Schnittdaten der Schnittliste.

In Fernsehstudios werden zur Produktion von sendefähigen Beiträgen zunehmend nicht-lineare Schnittsysteme eingesetzt. Bei derartigen Schnittsystemen werden die Signale der Video- und Audioinformationen zunächst ungeordnet in einen Speicher mit wahlfreiem Zugriff geschrieben, z.B. in einen Plattenspeicher. Nachfolgend kann auf bestimmte Bildszenen (Takes) der gespeicherten Video- und Audioinformationen, nicht-linear, d.h. ohne zeitliche Verzögerung, zugegriffen werden. Es ist üblich, anhand der im Speicher abgelegten Video- und Audioinformationen auch die Schnittzeitpunkte zu bestimmen, d.h. die Anfangs- und Endzeiten jener Takes, die zur Aussendung kommen sollen. Die Schnittzeitpunkte der ausgewählten Takes sowie die Reihenfolge der Takes werden in eine Schnittliste (EDL - Edit Decision List) eingetragen. Die in die Schnittliste aufgenommenen Schnittdaten dienen zur Steuerung des (Platten)-Speichers. Entsprechend den Schnittdaten der Schnittliste kann eine fortlaufende sendefähige Bild/Audio-Folge aus dem Speicher gelesen werden. Im Gegensatz zur linearen (sequentiellen) Magnetbandtechnik läßt sich mit einem derartigen nicht-linearen Schnittsystem die anhand einer Schnittliste zusammengestellte Bild/Audio-Folge on-line überprüfen. Einträge in der Schnittliste lassen sich bei einem nicht-linearen Schnittsystem einfach ändern.

Die Schnittzeitpunkte lassen sich nicht nur anhand der wiedergegebenen Bilder des Videomaterials ermitteln, sondern auch anhand des Begleittons. Dabei hört man die zeitparallel zum Videomaterial vorliegenden Audioinformationen ab und setzt dort Schnittmarken, wo der Schnitteinstieg und Schnittausstieg bestimmter, zur Aussendung kommenden Takes liegen soll. Diese Editierart bietet sich zur Produktion aktueller Nachrichtsendungen an, da mit Hilfe der Audioinformationen die Schnittzeitpunkte der zur Aussendung kommenden Takes schneller und exakter festgelegt werden können als mit Hilfe der Bildinformationen des Videomaterials.

Aus der WO 94/16443 ist ein System zum rechnergestützten Schneiden von Audiodaten bekannt, bei welchem ein Teil des Amplitudenverlaufs der Audiodaten auf einem Videosichtgerät dargestellt wird. Anhand von Einbrüchen im Amplitudenverlauf werden solche Ton- oder Sprachunterbrechnungen ermittelt, die als Schnittzeitpunkte für Schnittmarken dienen könnten. Das Einrichten und Auswerten von Amplitudenverläufen anhand von Audiodaten erfordert viel Fingerspitzengefühl und Spezialkenntnisse. Dieses System ist daher zur Schnittfestlegung von aktuellen (Fernseh)-Nachrichtenbeiträgen durch technisch nicht vorgebildete Redakteure wenig geeignet.

Der vorliegenden Erfindung liegt die Aufgabe zugrunde, ein System zum Schneiden von digitalen Video- und Audioquelleninformationen nach der eingangs genannten Art zu schaffen, welches eine einfache, schnelle und präzise Schnittfestlegung erlaubt.

Diese Aufgabe wird erfindungsgemäß gelöst durch ein Mittel zum Erkennen von Sprache in den Audioinformationen und zum Erzeugen einer Zeichenfolge, insbesondere einer ASCII-Zeichenfolge, welche mit der Sprache zeitlich korrespondiert, zur Darstellung auf einem Bildschirm des Anzeigemittels, und ein Mittel zum Ableiten von Schnittdaten anhand markierter Teile der auf dem Bildschirm des Anzeigemittels dargestellten Zeichenfolge.

Die Erfindung weist den Vorteil auf, daß aktuelle (Fernseh)-Nachrichtensendungen, die in der Regel überwiegend Sprechtext enthalten, nunmehr zeitlich schneller und präziser editiert werden können als beim Stand der Technik. Grundlage für die Schnittfestlegung sind nicht mehr die Bildinformationen des Videoquellenmaterials oder die von einem Lautsprecher abgestrahlten Information des Audioquellenmaterials, sondern ein von der Audiodatenfolge des Audioquellenmaterials durch Spracherkennung abgeleiteter, auf dem Bildschirm einer Anzeigevorrichtung dargestellter Text. Die Wortfolge in dem dargestellten Text ist mit der Bildfolge zeitlich verkoppelt, weil die Bild- und Toninformationen eines Nachrichtenbeitrags üblicherweise zeitgleich aufgenommen und gespeichert werden. Den Speicherort der Bild- und Toninformationen auf dem Aufzeichnungsmedium wird durch einen Zeitcode festgelegt. Jedem Wort in dem dargestellten Text ist somit ein bestimmter Zeitcodewert des Zeitcodes zugeordnet, der sich vorteilhaft bei der Erstellung der Schnittliste verwenden läßt.

Gemäß einer Weiterbildung der Erfindung sind zur Festlegung eines Schnittbeginns und/oder Schnittendes Marken zur Kennzeichnung von Grenzen markierter Teile der auf dem Bildschirm des Anzeigemittels dargestellten Zeichenfolge vorgesehen. Eine Ausgestaltung der Erfindung besteht aus einem Mittel zum Festlegen der Position der Grenzen der markierten Teile der auf dem Bildschirm des Anzeigemittels dargestellten Zeichenfolge und aus einem Mittel zur Umwandlung der Position der Grenzen der markierten Teile in den Video- und Audioinformationen zugeordnete Zeitcodedaten und zur Übernahme der Zeitcodedaten als Schnittdaten in die Schnittliste.

Die Position der Marken im dargestellten Text entspricht einem bestimmten Zeitcodewert. Die durch jeweils eine Marke gekennzeichneten Grenzen (Schnittbeginn, Schnittende) eines gewählten Takes stehen für bestimmte Zeitcodewerte des Schnitteinstiegs und des Schnittausstiegs. Zur Verschiebung der Position der Markierung auf dem Bildschirm ist eine Maus vorgesehen. Die mit Hilfe der Maus angefahrene Markenposition wird in dem Video- und Audiomaterial zugeordnete Zeitcodedaten werte umgewandelt und in die Schnittliste eingetragen.

Die erfindungsgemäße Zusammenstellung der Schnittliste erfordert keinen ausgebildeten Cutter. Wenn technische oder künstlerische Gesichtspunkte keine Rolle spielen, wie das beim Zusammenstellen einer aktuellen Nachrichtensendung üblicherweise der Fall ist, kann nunmehr auch ein Journalist direkt die Schnittliste für seinen Sendebeitrag erstellen und das Ergebnis der Schnittfestlegung unmittelbar kontrollieren und gegebenenfalls ändern, bevor sein Beitrag ausgesendet wird.

Eine Weiterbildung der Erfindung besteht darin, daß der Bildschirm der Anzeigeeinrichtung als Touch-Screen ausgeführt ist, um durch Berühren des Bildschirms die Positionsgrenzen bestimmter Teile in der dargestellten Zeichenfolge festzulegen. Durch Antippen eines Satzanfangs oder Satzendes in dem dargestellten Text lassen sich die jeweiligen Zeitcodedaten in die Schnittliste übernehmen, ohne daß eine Maus zur Verschiebung einer Marke und Bestätigung zur Eingabe benutzt werden muß.

Aktuelle Fernsehnachrichtenbeiträge, die ausländischen Agenturen bzw. Sendeanstalten anbieten und über Satellit zur heimatlichen Fernsehanstalt übertragen, liegen oft in einer nicht im Heimatland verkehrsüblichen Sprache vor. Das empfangene Nachrichtenmaterial ist im Heimatstudio aufzubereiten, d.h. die Sprachanteile im empfangenen Audiomaterial zu übersetzen und an die Stelle der Orginalaudioanteile zu setzen. Alternativ ist das empfangene Nachrichtenmaterial von einem Studiosprecher in der Landessprache zu kommentieren, bevor es zur Aussendung kommt.

Auch ein dem Bildmaterial derart zugesetzter Begleitton kann einer Spracherkennung zugeführt werden, um anhand des erhaltenen Textes eine Schnittliste zu erstellen. Diese Vorgehensweise hat den Vorteil, daß ein durch die Spracherkennung erzeugtes ASCII-Textfile auch zur Steuerung eines Teleprompters für den Kommentator eingesetzt werden kann. Durch Änderung des Audio-Pitches läßt sich bei unterschiedlichen Längen der Audio- und Video-Takes gegebenenfalls die erforderliche (Lippen)-Synchronität wieder herstellen, wobei die ermittelten Schmittmarken als Bezugspunkt dienen können.

Die nach Abschluß des Editierens verbleibende ASCII-Zeichenfolge kann für notwendige Dokumentionszwecke weiterverwertet werden.

Eine Weiterbildung der Erfindung besteht darin, daß das Spracherkennungsmittel eine Einrichtung zum Erkennen unterschiedlicher Stimmen in den gesprochenen Audioinformationen aufweist, welche jeder Stimme einen bestimmten Zeichenfont zur Abgrenzung von anderen Stimmen zuordnet. Textpassagen im dargestellten Text, die von verschiedenen Sprechern stammen, lassen sich so durch eine entsprechende Zeichengestaltung, z. B. im Zeichenfont oder in der Zeichenfarbe, einem bestimmten (weiblichen oder männlichen) Sprecher zuordnen. Der dargestellte Text laßt sich so dem Text eines Drehbuchs nachbilden, welches für verschiedene Sprecher angelegt ist.

Eine andere Weiterbildung der Erfindung besteht darin, daß auf dem Bildschirm des Anzeigemittels neben Zeichen der erzeugten Zeichenfolge auch den Zeichen zeitlich zugehörige Bilder der gespeicherten Videoinformationen dargestellt werden. Insbesondere ist vorgesehen, daß auf dem Bildschirm des Anzeigemittels mehrere Einzelbilder der gespeicherten Videoinformationen dargestellt werden, deren Zeitcodedaten mit Zeitcodedaten an den Grenzen markierter Teile der dargestellten Zeichenfolge für die Festlegung des Schnittbeginns und/oder Schnittendes ausgewählter Takes zeitlich übereinstimmen.

Weiterhin ist vorteilhaft, daß ein oder mehrere durch Schnittmarken begrenzte(r) Insertschnitt(e) zeitlich mit einer auf dem Bildschirm angezeigten Gesamt-Sendezeit zur Darstellung einer verbleibenden Rest-Sendezeit gekoppelt werden kann, damit beispielsweise ein Kommentator abschätzen kann, wieviel Zeit ihm noch für einen aufzusprechenden Kommentar bleibt. Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild gemäß der Erfindung und
- Fig. 2: eine graphische Benutzeroberfläche zur Erstellung einer Schnittliste gemäß der Erfindung.

Gleiche Teile sind in den Figuren mit gleichen Bezugszeichen versehen.

Ein sendefähiger Fernsehbeitrag besteht aus einer Sequenz einzelner Takes. Die zeitliche Reihenfolge der Takes legt ein Editor (Cutter) fest, indem er das Quellenmaterial sichtet und bestimmte Takes in dem Quellenmaterial für eine spätere Aussendung auswählt. Damit die ausgewählten Takes in der vom Editor gewünschten Reihenfolge zur Aussendung gelangen, ist eine Liste mit Editierdaten aufzustellen, die sogenannte EDL (Edit Decision List). Ein von Anweisungen der EDL gesteuertes Schnittsystem liest anschließend on-line das in einem wahlfrei zugreifbaren Speicher abgelegte Quellenmaterial aus. Die nachfolgend beschriebene EDL ist nicht auf ein bestimmtes EDL-Format festgelegt. Die EDL kann in einem der bekannten EDL-Formate erstellt sein, z.B. CMX, GVG, SONY.

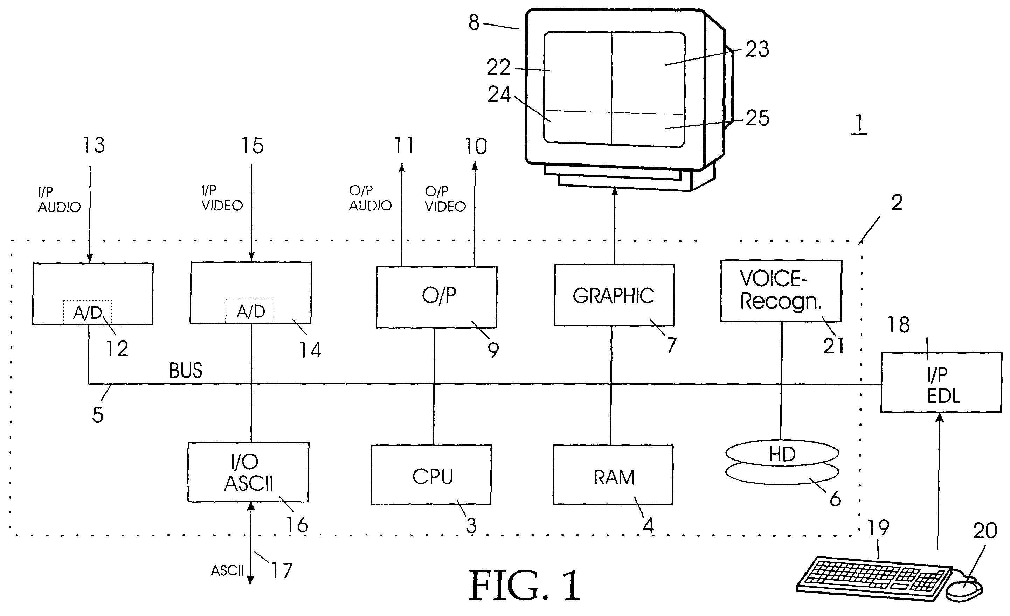

Bei dem in der Fig. 1 dargestellten Blockschaltbild bezeichnet 1 ein rechnergestütztes System zum Editieren von Audio- und Videosignalen. Das System 1 enthält eine rechnergestutzte Steuereinrichtung 2 mit einer CPU 3 (Central Processing Unit) und einen flüchtigen Speicher 4 (RAM = Random Access Memory), welcher über einen Bus 5 mit der CPU 3 verbunden ist. An dem Bus 5 sind ferner angeschlossen: ein nicht-flüchtiger Speicher 6, z.B. ein Plattenspeicher, ein Grafikmodul 7 zur Ansteuerung eines Monitors 8, ein Ausgangsmodul 9 zum Ausgeben eines Videosignals an einem Ausgang 10 sowie von Audiosignalen an einem Ausgang 11, ein Audio-Eingangsmodul 12 zum Empfangen von Audioquellsignalen an einem Eingang 13, ein Video-Eingangsmodul 14 zum Empfangen eines Videoquellsignals an einem Eingang 15, ein Ein-/Ausgabemodul 16 zum Ein- und Ausgeben von ASCII-Zeichenfolgesignalen über einen bidirektionalen seriellen Bus 17, ein Eingabemodul 18 zum Empfangen von Daten einer Tastatur 19 bzw. einer Maus 20, und schließlich ein Spracherkennungsmodul 21.

Um nicht-linear zu schneiden, sind zunächst die an Eingängen 13 und 15 bereitgestellten Audio- und Videoquellsignale über die Eingangsmodule 12, 14 und den Bus 5 in den nicht-flüchtigen Speicher 6 zu schreiben. Liegen die Audio- und Videoquellsignale als Analogsignale vor, sind die Audio- und Videoquellsignale zuvor A/D zu wandeln. Zu diesem Zweck weisen die Eingangsmodule 12 und 14 entsprechende A/D-Wandler auf.

Gemäß der Erfindung sind die Audioquellsignale in eine Zeichenfolge umzuwandeln. Die Umwandlung geschieht software-gesteuert in dem Spracherkennungsmodul 21, welches in den Audioquellsignalen enthaltene Wörter feststellt und die festgestellten Wörter als digitale Zeichenfolge, vorzugsweise als ASCII-Zeichenfolge, ebenfalls in den nicht-flüchtigen Speicher 6 schreibt. Spracherkennungssysteme sind an sich bekannt (DE 41 11 781 A1, EP 0 366 192 A2) und brauchen daher in diesem Zusammenhang nicht näher erläutert werden.

Die ASCII-Zeichenfolge ist so zu speichern, daß der zeitliche Bezug zwischen der erzeugten ASCII-Zeichenfolge und den Audio- und Videoquellsignalen gewahrt bleibt. Da die Audio- und Videoquellsignale bei der Speicherung über einen Zeitcode, z.B. einen SMPTE-Zeitcode, zeitlich miteinander verkoppelt sind, korrespondiert unter dieser Voraussetzung die erzeugte ASCII-Zeichenfolge zeitlich mit den Audio- und Videoquellsignalen. Wird die ASCII-Zeichenfolge wieder aus dem Speicher 6 gelesen und unter Zuhilfenahme des Grafikmoduls 7 auf einem Bildschirm des Monitors 8 als Text dargestellt, so kann jedem Wort des Textes ein bestimmter Zeitcode-Wert zugeordnet werden. Über diesen Zeitcode-Wert kann auf das einem Wort zugehörige Einzelbild des Videosignals bzw. den zugehörigen Teil des Audiosignals zugegriffen werden.

Die vom Spracherkennungsmodul 21 erzeugte ASCII-Zeichenfolge läßt sich nicht nur zur Erstellung einer EDL, d.h. zur Schnittfestlegung, verwenden. Die erzeugte ASCII-Zeichenfolge kann über den seriellen Bus 17 des Ein-/Ausgabemoduls 16 auch (nicht dargestellten) externen Geräten zugeleitet werden, z.B. einem Drucker, einem Gerät zur Weiterverarbeitung der ASCII-Zeichenfolge, einem Server oder einem Teleprompter.

Über den seriellen Bus 17 des Ein-/Ausgabemoduls 16 lassen sich dem Schnittsystem 1 auch externe ASCII-Zeichenfolgen zuführen. Das Zuführen externer ASCII-Zeichenfolgen ist dann sinnvoll, wenn beispielsweise aus dem Ausland stammende Fernsehnachrichtenbeiträge von einem Sprecher nach einer Textvorlage zu kommentieren sind. Ferner ist die Eingabe einer ASCII-Zeichenfolge dann angezeigt, wenn ein aus dem Ausland stammender Nachrichtenbeitrag zwar Sprache als Begleitton zum empfangenen Bildmaterial enthält, aber in einer Sprache, die nicht verkehrsüblich ist. In diesem Fall ist vor einer Aussendung des empfangenen Nachrichtenbeitrags zunächst eine Übersetzung anzufertigen. Da Übersetzungen heute computergestützt durchgeführt werden können, bietet es sich an, eine als ASCII-Datenfile generierte Übersetzung direkt von einem Ausgang des Computers über den seriellen Bus 17 dem Ein-/Ausgabemodul 16 zuzuleiten und als Text auf dem Bildschirm des Monitors 8 darzustellen.

Durch die Übersetzung fremdsprachlichen Audiomaterials geht in der Regel die Lippensynchronität und damit der ursprünglich vorhandene zeitliche Bezug zum empfangenen Videoquellenmaterial verloren. Da auf dem Bildschirm des Monitors 8 sowohl der übersetzte Text als auch die mehr oder weniger zum übersetzten Text passenden Einzelbilder dargestellt werden, können durch Aufhebung der zeitlichen Verkopplung der als ASCII-Zeichenfolge vorliegenden Übersetzung und dem empfangenen Videoquellsignal sowie durch anschließendes Editieren, wie Löschen, Einfügen oder Ersetzen bestimmter Wörter im angezeigten Text, die Synchronität zwischen den Audio- und Videoquellensignalen wieder hergestellt werden. Die Synchronität läßt sich vorteilhaft durch Vergleich des dargestellten Textes mit der zugehörigen Bildfolge prüfen. Wenn nach dem Editieren des dargestellten Textes, gegebenenfalls auch nach Editieren von Einzelbildern in der Bildfolge, der Text zeitlich zu der Bildfolge paßt, wird die zeitliche Verkopplung wieder hergestellt und es kann mit dem Erstellen einer EDL anhand des verbliebenen übersetzten Textes begonnen werden.

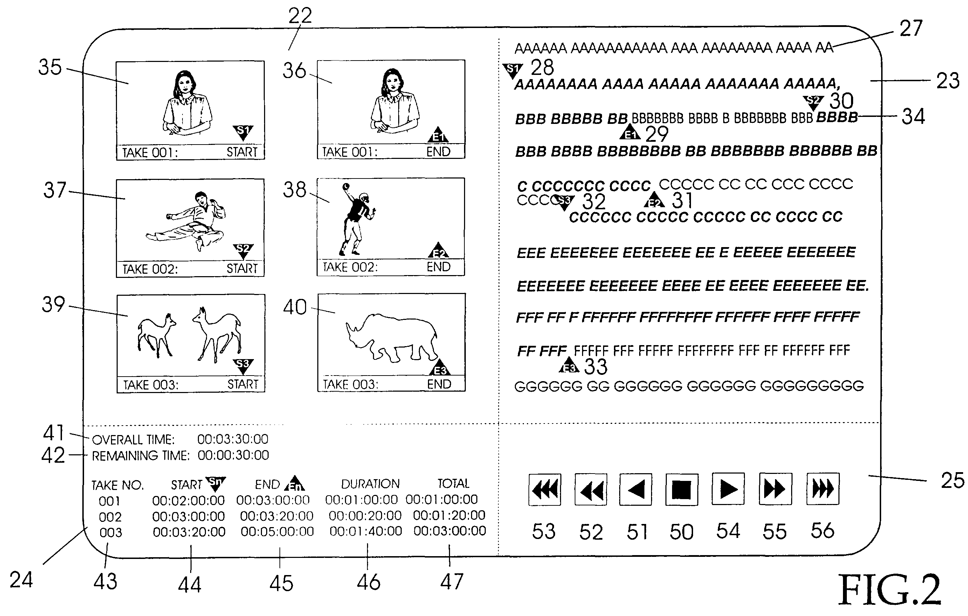

Die Fig. 2 zeigt eine graphische Benutzeroberfläche zur Darstellung auf dem Bildschirm des Monitors 8. Die graphische Benutzeroberfläche gliedert sich in vier Bereiche: einen Bildbereich 22, einen Textbereich 23, einen EDL-Bereich 24 und einen Steuerbereich 25. In dem Textbereich 23 wird der vom Spracherkennungsmodul 21 generierte Text 27 dargestellt. Je nach Umfang des generierten Textes läßt sich in dem Textbereich 23 der gesamte Text oder auch nur ein Teil des Textes darstellen. Durch Auf- und Abscrollen des Textes lassen sich bestimmte Textteile zur Darstellung auf dem Bildschirm auswählen. Zur Festlegung eines Schnittbeginns und/oder Schnittendes anhand des Textes können Teile des dargestellten Textes markiert werden. Dies kann beispielsweise dadurch geschehen, daß optische Marken an den Anfang und das Ende des zur Aussendung kommenden Texteiles gesetzt werden. Der Anfang (START S1) eines Takes 001 läßt sich beispielsweise durch eine Marke 28 und das Ende (END E1) des Takes durch eine Marke 29 kennzeichnen. Die Startmarken 30, 32 und die Endmarken 31, 33 begrenzen die folgenden Takes 002 und 003.

Eine andere Möglichkeit, den Text zu markieren, besteht darin, den gewünschten Textteil durch eine Aufhellung 34 hervorzuheben. Die Position und die Länge der Aufhellung 34 kann mit Hilfe der Maus 20 oder durch Cursorsteuerung über die Tastatur 19 festgelegt werden. Selbstverständlich besteht auch die Möglichkeit, den gewünschten Text sowohl durch Marken als auch durch Aufhellungen gegenüber solchen Textteilen hervorzuheben, die nicht in die EDL aufgenommen werden sollen. Weitere Möglichkeiten bestehen darin, gewünschte Textpassagen durch Unterstreichen oder durch Schriftfontsänderung von solchen Textpassagen abzuheben, die nicht zur Aussendung kommen sollen.

Zum Kenntlichmachen von Textpassagen als Hilfsmittel zur Erstellung einer EDL läßt sich besonders vorteilhaft ein Monitor 8 mit Touch-Screen-Steuerung einsetzen. Hierbei wird mit einem Finger auf solchen Textzeilen entlanggefahren, die im Textbereich 23 des Bildschirms dargestellt sind und deren zeitliche Entsprechung in Form gewünschter Video- und Audioinformationen zur Aussendung kommen sollen.

Der Bildbereich 22 enthält Bildfenster 35 bis 40 zur Darstellung von Bildern am Start und Ende der durch die markierten Textteile ausgewählten Takes 001 bis 003. In dem Bildfenster 35 ist ein Einzelbild der im Speicher 6 abgelegten Videoinformation dargestellt, welches zeitlich der Position der Startmarke 28 des Takes 001 zugeordnet ist. In dem Bildfenster 36 ist ein der Position der Endmarke 29 zugeordnetes Einzelbild zu sehen. Das ist möglich, weil der im Textbereich 23 dargestellte, fortlaufende Text über den Zeitcode mit Bildern der gespeicherten Videoinformation korrespondiert. Durch Verschieben der Position einer Schnittmarke im Textbereich 23 läßt sich im Bildbereich 22 das jeweils zugehörige Bild an der Schnittposition durch die Verknüpfüng über den Zeitcode im Speicher 6 auffinden und durch Zwischenspeicherung im flüchtigen Speicher 4 und wiederholtes Auslesen als Standbild wiedergeben.

Der EDL-Bereich 24 dient zur Anzeige verschiedener Zeitcodewerte und Schnittzeiten. In der Zeile 41 ist die Gesamtzeit angegeben, die ein Bildregisseur für den fertigen Fernsehbeitrag vorgibt. Die Zeile 42 gibt die noch verbleibende Zeit an, d.h. die Differenz zwischen der Gesamtzeit und der Summe der Dauer bereits ausgewählter Takes. Ferner enthält der EDL-Bereich 24 einige Informationen zu den ausgewählten Takes. In einer Spalte 43 sind die Take-Nummern angegeben, in einer Spalte 44 die Zeitcodewerte an der Position der Startmarken 28, 30, 32, in einer Spalte 45 die Zeitcodewerte an der Position der Endmarken 29, 31, 33, in einer Spalte 46 die jeweilige Dauer der einzelnen Takes. In einer Spalte 47 sind addierte Zeiten der Takes dargestellt, um Auskunft darüber zu erhalten, wieviel Zeit für die ausgewählten Takes bisher angesammelt worden ist. Die Zeitcodewerte in den Spalten 44 und 45 entsprechen den 28 bis 33.

Im Gegensatz zum Stand der Technik, bei welchem die einzelnen Zeitcodewerte zunächst zu ermitteln und dann mit einer Tastatur 19 in einen Steuerrechner eingegeben werden müssen, können beim Gegenstand der vorliegenden Erfindung die Zeitcodewerte an den Schnittmarkenpositionen mit dem Setzen von Marken bzw. der Markierung von Textteilen automatisch in die EDL des EDL-Bereichs 24 übernommen werden.

Der Steuerbereich 25 enthält verschiedene Buttons zur Steuerung verschiedener Wiedergabefunktionen, um das Markieren von Text zu erleichtern und zu beschleunigen. Der Button 50 bezeichnet eine Stopfunktion: ein Text-Scrollen wird unterdrückt. Durch Mausklick auf den Button 51 läßt sich das Schnittsystem in einen Standardwiedergabebetrieb bringen, bei dem der Text durchläuft. Ein Klick auf den Button 52 schaltet das System in einen schnellen sichtbaren Text-Vorlauf. Mit einem Klick auf den Button 53 springt das System an den Anfang des in dem wahlfreien Speicher 6 abgelegten Quellenmaterials. Ein Klick auf den Button 52 bewirkt eine sichtbare Textwiedergabe rückwärts, ein Klick auf den Button 55 eine schnelle rückwärts gerichtete Textwiedergabe und ein Klick auf den Button 56 einen Sprung an das Ende des im wahlfreien Speicher 6 abgelegten Quellenmaterials des Textes.

Das erfindungsgemäße Schnittsystem ist so ausgelegt, daß beim Durchlaufen des Textes oder beim Entlangfahren einer Marke in Textzeilen neben zugehörigen Bildern auch der zugehörige Ton wiedergegeben wird.

Liegt die EDL und damit die Schnittfolge der auszusendenden Video- und Audioinformationen fest, kann in an sich bekannter Weise der wahlfreie Speicher 6 im Sinne eines nicht-linearen Schnitts durch EDL-Steuerung on-line gelesen und der Beitrag ausgesendet werden.

## Patentansprüche

1. System zum Schneiden von digitalen Video- und Audioinformationen, umfassend: ein Speichermittel zur Aufnahme und Wiedergabe der Video- und Audioinformationen, ein Anzeigemittel zur Anzeige von Informationen, ein Mittel zum Erstellen einer Schnittliste, die Schnittdaten enthält, und ein Steuermittel zur Steuerung des Speichermittels in Abhängigkeit der Schnittdaten der Schnittliste,
gekennzeichnet durch
- ein Mittel (21) zum Erkennen von Sprache in den Audioinformationen und zum Erzeugen einer Zeichenfolge (27), insbesondere einer ASCII-Zeichenfolge, welche mit der Sprache zeitlich korrespondiert, zur Darstellung auf einem Bildschirm des Anzeigemittels (8), und
- ein Mittel (2) zum Ableiten von Schnittdaten anhand markierter Teile (28 bis 34) der auf dem Bildschirm des Anzeigemittels (8) dargestellten Zeichenfolge (27).

2. System nach Anspruch 1,
gekennzeichnet durch
Marken (28 bis 33) zur Festlegung eines Schnittbeginns und/oder Schnittendes vermittels von Grenzen markierter Teile (28 bis 34) der auf dem Bildschirm des Anzeigemittels (8) dargestellten Zeichenfolge (27).

3. System nach Anspruch 1 und 2,
gekennzeichnet durch
- ein Mittel (19, 20) zum Festlegen der Position der Grenzen der markierten Teile (28 bis 34) der auf dem Bildschirm des Anzeigemittels (8) dargestellten Zeichenfolge (27) und
- ein Mittel (3) zur Umwandlung der Position der Grenzen der markierter Teile (28 bis 34) in den Video- und Audioinformationen zugeordnete Zeitcodedaten (41 bis 47) und zur Übernahme der Zeitcodedaten (41 bis 47) als Schnittdaten in die Schnittliste (24).

4. System nach Anspruch 1 bis 3,
dadurch gekennzeichnet,
daß der Bildschirm der Anzeigeeinrichtung (8) als Touch-Screen ausgeführt ist, um durch Berühren des Bildschirms die Positionsgrenzen bestimmter Teile (28 bis 34) in der dargestellten Zeichenfolge (27) festzulegen.

5. System nach Anspruch 1,
dadurch gekennzeichnet,
daß das Spracherkennungsmittel (21) eine Einrichtung zum Erkennen unterschiedlicher Stimmen in den gesprochenen Audioinformationen aufweist, welche jeder Stimme einen bestimmten Zeichenfont zur Abgrenzung von anderen Stimmen zuordnet.

6. System nach Anspruch 1,
dadurch gekennzeichnet,
daß auf dem Bildschirm des Anzeigemittels (8) neben Zeichen der erzeugten Zeichenfolge (27) auch den Zeichen zeitlich zugehörige Bilder der gespeicherten Videoinformationen dargestellt werden.

7. System nach Anspruch 6,
dadurch gekennzeichnet,
daß auf dem Bildschirm des Anzeigemittels (8) mehrere Einzelbilder (36 bis 40) der gespeicherten Videoinformationen dargestellt werden, deren Zeitcodedaten mit Zeitcodedaten an den Grenzen markierter Teile (28 bis 34) der dargestellten Zeichenfolge (27) für die Festlegung des Schnittbeginns und/oder Schnittendes ausgewählter Takes zeitlich übereinstimmt.
